# EUROPEAN PATENT APPLICATION

(11) **EP 3 998 191 A1**
(43) Date of publication of application: **18.05.2022**
(21) Application number: 21158180.6
(22) Date of filing: 19.02.2021
(51) Int. Cl.: B64C 1/14, B64C 1/22, B64C 29/00, B64D 27/24

(54) **PASSENGER AIRCRAFT**

(71) Applicant: Lilium eAircraft GmbH, 82234 Wessling (DE)
(72) Inventor: Jung, Moritz, 81249 Munich (DE); Caruso, Alberto, 82234 Weßling (DE); Vanicek, Thomas, 82234 Weßling (DE); Wiegand, Daniel, 82234 Weßling (DE); Möbius, Andreas, 82234 Weßling (DE)
(74) Representative: Schmidt, Steffen

(57) **Abstract**

The invention refers to a passenger aircraft, in particular passenger aircraft capable of vertical take-off and landing, comprising: a fuselage including at least one cabin for carrying one or more human passengers and a cargo bay for holding passenger luggage with an opening located in the rear of the fuselage for accessing the cargo bay, and a door adapted to selectively close or open the opening, wherein the door is adapted to open upwardly.

## Description

### Field

The invention relates to a passenger aircraft, in particular a passenger aircraft capable of vertical take off and landing (VTOL).

### Related Art

A passenger aircraft capable of vertical take off and landing (VTOL) has the potential to incorporate both the advantages of helicopters, namely starting and landing using limited space and/or in rough terrain, as well as the advantages of conventional aircraft, such as high traveling velocities and efficient cruising, with one another. The reduction of energy consumption is particularly relevant in the case of electrically powered VTOL aircraft (eVTOL) such as the eVTOL aircraft described in Lilium^{®}'s patent applications US 2016/0023754 A1 or US 2016/03115221 A1.

Passenger aircrafts capable of vertical take off and landing are particularly suitable for use as an urban air taxi to provide regional mobility connecting city centers. For a suitable urban air taxi service, passenger aircraft need to be able to safely carry luggage along. In order to optimize operational feasibility, especially for a passenger oriented hop-on/hop-off service, a significant luggage capacity needs to be provided in a manner that can be accessed rapidly and easily, preferably without obstructing passenger access to and from the aircraft. In favor of energy efficiency, weight distribution and aerodynamic impact need to be optimized.

### Description

It is an object of the invention to overcome the disadvantages of the prior art, in particular to provide a passenger aircraft, such as a VTOL, more particularly an eVTOL, with an easily and/or rapidly accessible and energy efficient means for carrying passenger luggage. This objective is solved by the subject matter of independent claim 1.

According to the invention, a passenger aircraft is provided, in particular a passenger aircraft capable of vertical take off and landing. The passenger aircraft is configured to be manned with at least one passenger who may be the aircraft pilot. In particular, the passenger aircraft is configured to be manned with at least two, preferably at least four, more preferred exactly five passengers, who may include at least one aircraft pilot. The passenger aircraft comprises a cabin for carrying one or more human passengers and a cargo bay for holding passenger luggage with an opening located in the rear of the fuselage. In particular, the cabin for the passengers is located in the forward portion of the aircraft, whereas the cargo bay is located in the rearward portion of the aircraft. Preferably, the cargo bay is located completely behind the cabin. It shall be clear that "forward" and "rearward" and like terms refer to directions in relation to the forward cruise flight direction of the aircraft. In particular, the opening of the cargo bay is situated in the very rear of the fuselage. Furthermore, the passenger aircraft comprises a door adapted to selectively close or open said opening. According to the invention, the door is adapted to open upwardly. It shall be clear that the term "upwardly" and similar directional terms shall, in the context of this disclosure, be understood in relation to the passenger aircraft being parked on the ground using its undercarriage. By providing the passenger aircraft with a cargo bay door opening upwards, accessibility to the cargo bay is significantly increased in comparison to known solutions, such as downwardly or laterally opening cargo bay doors commonly used for helicopters or other passenger aircraft. When opened upwardly, the door is out of the way of ground operators handling passenger luggage and it does not obstruct their access to the cargo bay and luggage contained therein. Furthermore, it has been shown that the invention provides improved stability even against strong winds on the ground. Additionally, the arrangement at the rear of the passenger aircraft allows for a particularly lightweight solution as the door can be designed substantially free of structural load bearing requirements.

In one embodiment of the passenger aircraft, the cargo bay includes a cargo bay floor arranged in a height of no more than 170 cm, in particular no more than 150 cm, more particularly no more than 130 cm from the ground. Additionally or alternatively, the floor of the cargo bay is arranged in a height of at least 50 cm from the ground, in particular at least 80 cm from the ground, all particularly at least 100 cm from the ground. The ground or ground level refers to the ground on which the undercarriage of the parked passenger aircraft is arranged. Terms such as "horizontal" used in this disclosure shall be understood in relation to said ground level. Preferably, the floor of the cargo bay is substantially flat and may be aligned substantially horizontally with regard to the ground. The floor of the cargo bay may be stationary, in particular with regard to the opened or closed state of the door. By arranging the floor of the cargo bay in such a height that a ground operator can easily access the cargo bay or luggage therein by hand or with the aid of a lifting device, such as a forklift, between their hip- and shoulder-level, while at the same time allowing for adequate ground clearance.

In a further development, the opening of the cargo bay has a bottom edge arranged level with the cargo bay floor. It is preferred that the bottom edge of the opening is not raised above the level of the cargo bay floor such that luggage can easily be sled into or out of the cargo bay by a ground operator. By situating the bottom edge of the opening and the floor of the cargo bay this way, the requirement for an additional door or door section folding downwards (and the corresponding surplus weight and components) to allow access to the cargo bay is avoided.

According to one embodiment of the passenger aircraft, the cargo bay has a width in the lateral direction of the passenger aircraft of at least 1 m, in particular at least 1.5 m and no more than 3 m, in particular no more than 2 m. Alternatively or additionally, the cargo bay has a depth in the longitudinal direction of the passenger aircraft of at least 0.5 m, in particular at least 1 m, and no more than 3 m, in particular no more than 2 m. Dimensioning the cargo bay in such a manner allows for a generous storage volume while allowing for easy access of the ground operator through the opening to luggage stored anywhere within the cargo bay.

In particular, the opening is the only access to the cargo bay. In particular, the passenger cabin and the cargo bay of the aircraft are preferably air-tightly isolated from one another. It may be preferred that the cargo bay comprises a closed casing separating the contents of the cargo bay from the remaining interior volume of the aircraft. Thereby, luggage or contents thereof are prevented from interfering with functional components of the aircraft. The passenger aircraft may, for example for safety reasons, contain no other than the single access opening in the rear of the aircraft towards the cargo bay.

According to one embodiment of the passenger aircraft that may be combined with the aforementioned ones, the opening extends in a natural direction of the passenger aircraft over at least 60%, in particular at least 80%, or the entirety of the cargo bay. Alternatively or additionally, the opening extends in a longitudinal direction of the passenger aircraft over at least 60%, in particular at least 80%, or the entirety of the cargo bay. It may be preferred that the opening extends over the majority of the area of the cargo bay in the lateral and longitudinal extension thereof. The opening thereby provides for a large area of access to the cargo bay and luggage stored therein such that a ground operator may easily access individual items of luggage, which is particularly suitable for individually serving the requirements of passengers during hop-on/hop-off urban air taxi operation. In addition, large access opening in relation to the size of the cargo bay allows to quickly load or unload the entire volume of the cargo bay, thereby allowing to accelerate ground handling of the passenger aircraft.

In one embodiment of the passenger aircraft, the opening has a hexagonal shape, particularly as seen from behind the aircraft. By providing the opening with a generally hexagonal shape, it is possible to provide an optimal compromise between the size of access to the cargo bay on the one hand and allowing for a sturdy and nevertheless lightweight fuselage- and door-structure.

Particularly, the door of the passenger aircraft comprises or consists of a single leaf configured to cover the opening entirely in a closed state of the door. In particular, the single door leaf may be hingedly attached to the fuselage at or near the top edge of the opening. The single leaf door may be lifted with the aid of at least one hydraulic and/or pneumatic spring from the closed state towards the opened state. It may be preferred that the single leaf door is attached with a first hinge at a first lateral end of the door leaf and a second hinge at an opposite, second lateral door end.

In a further embodiment of the passenger aircraft, the door has an extension in the longitudinal direction of the passenger aircraft larger than an extension of the opening in the longitudinal direction of the passenger aircraft. The lateral extension of the door may be substantially the same as the lateral extension of the opening. In particular, the door comprises a convex bulge protruding rearwardly, particularly forming the rearmost part of the passenger aircraft. They extending the door behind the rear edge of the opening to the cargo bay, and aerodynamically optimized shape of the aircraft can be achieved. The bulge of the aircraft door may particularly be V-shaped, U-shaped or in shaped another parabolic manner. Furthermore, by extending the door rearwardly behind the opening of the cargo bay, the door may thus be easily provided with clearance for bulky luggage and/or provide an additional compartment to store functional components of the aircraft, particularly electronic components, such as an antenna, a radar unit, batteries, and/or a black box.

In yet another embodiment of the passenger aircraft, the door has an external surface and the fuselage has an outer surface, wherein the fuselage and the door are adapted to one another to realize a smooth transition from the outer surface to the external surface. In particular, a smooth transition is realized completely circumferentially along the interface of the door facing the opening. By providing an aerodynamically smooth transition along the interface of the door towards the opening in the fuselage, and aerodynamically optimized aircraft design may be realized in favor of efficient flight operation.

According to one embodiment of the passenger aircraft that may be combined with the previous ones, the door is adapted to open in the vertical direction above the cargo bay. In particular, the door has a bottom end arranged level with the bottom edge of the opening and/or with the cargo bay floor in a closed state of the door. In the closed state of the door, locking means arranged at the bottom end of the door may cooperate with a corresponding locking member arranged at the bottom edge of the opening to safely and securely hold the door closed during flight operation of the aircraft. It may be preferred that locking means and/or locking member are arranged diametrically opposite with regard to one or more hinge pivotably attaching the door to the fuselage. Locking means and/or locking member may include at least one sensor to detect a closed and/or opened state of the door, wherein preferably the at least one sensor is communicatively coupled with at least one indicator in the passenger cabin. Alternatively or additionally, the door comprises a bottom end arranged at least as high as or approximately level with the top edge of the opening in a fully opened state of the door. By raising the door in the opened state to at least the level of the top edge of the opening or even higher, a ground operator can access the cargo bay without any obstruction through the door.

In particular, a passenger aircraft may in at least one embodiment comprise at least one electrically powered in particular ducted fan engine adapted to provide flight propulsion. The passenger aircraft may comprise a multitude of electrically powered engines to provide flight propulsion, some or all of which may be realized as ducted fan engines. In order to allow for vertical takeoff or landing, the passenger aircraft may be provided with at least one, preferably a multitude of, engines coupled to the fuselage pivotable between a vertical orientation for hovering flight, take-off and/or landing-operation, and a horizontal orientation for cruising flight. It may be preferred that the cargo bay is arranged laterally between a first engine or a first set of engines on one lateral side of the aircraft and a second engine or a second set of engines on another, opposite lateral side of the aircraft, thereby allowing for easy means to allow for even weight distribution.

In particular, the rear of the fuselage may be free of any thrust engine. Alternatively or additionally, the rear of the fuselage is free of empennage for pitch control and/or yaw control. Furthermore, additionally or alternatively, the rear of the fuselage is free of a boom, such as a boom carrying a rotor. Generally speaking, the rear of the fuselage is free of any relatively heavy functional aircraft component that would require the opening and/or door to require a structural enhancement and accompanying surplus weight. By designing the rear of the fuselage free of heavy functional aircraft components, the cargo bay opening and/or may be designed in a particularly lightweight and aerodynamically optimized manner, leaving substantial amount of design freedom to select an aerodynamically optimized shape, thereby allowing for a significantly improved flight efficiency in comparison to conventional aircraft.

### Brief description of the drawings/figures

Preferred configurations of the invention are described in the dependent claims. The accompanying drawings illustrate the embodiments of the present disclosure and, together with the description, further serve to explain the principles of the embodiments and to enable a person skilled in the pertinent art to make and use the embodiments.
- Figure 1: shows a perspective view of an aircraft with an opened cargo bay;
- Figure 2: a schematic side view of an aircraft in accordance with Fig. 1, indicating an open and closed arrangement of the cargo bay door;
- Figure 3: a detailed perspective view of the opened cargo bay of the aircraft shown in Fig. 1;
- Figure 4: a perspective rear view of the opened cargo bay of the aircraft shown in Fig. 1

The exemplary embodiments of the present disclosure will be described with reference to the accompanying drawings. Elements, features and components that are identical, functionally identical and have the same effect are - insofar as is not stated otherwise - respectively provided with the same reference character.

In the following description of the embodiment shown in the figures, the passenger aircraft is generally designated with reference numeral 1. The passenger aircraft 1 includes a fuselage 11 which, as its main constituents, comprises a passenger cabin 15 and a cargo bay 3 for receiving passenger luggage 9.

The passenger cabin 15 contains seats for several passengers including a pilot and may be accessible via a passenger door 16 arranged on the left side of the aircraft 1. The passenger door 16 is arranged in the longitudinal direction X of the aircraft 1 between a canard structure 12 in the front and wings 14 attached to a central section of the aircraft 1 fuselage 11.

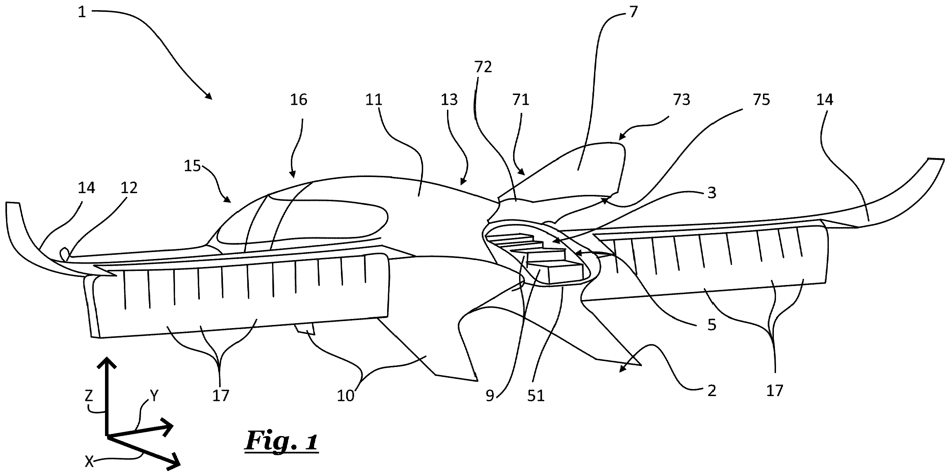

The aircraft 1 shown in the figures is an electrically powered vertical take-off and landing (eVTOL) aircraft. Figure 1 shows the aircraft 1 parked on the ground 2 supported by its undercarriage 10. The aircraft 1 has wings 14 acting as primary lift bodies, which are attached to the left and right lateral sides of the central fuselage 11. Furthermore, the aircraft has canard structures 12 attached to the left and right lateral sides of the front of the fuselage 11. The wings extend in the lateral direction Y of the aircraft. A multitude of electrically powered ducted fan engines 17 for providing thrust to the aircraft 1 are pivotably attached to the fuselage 11 via the canard structures 12 and wings 14.

The cargo bay 3 of the aircraft 1 is arranged at the longitudinally rearward end of the fuselage 11. The cargo bay 3 is dimensioned to hold multiple items of passenger luggage 9, typically multiple bags and/or suitcases.

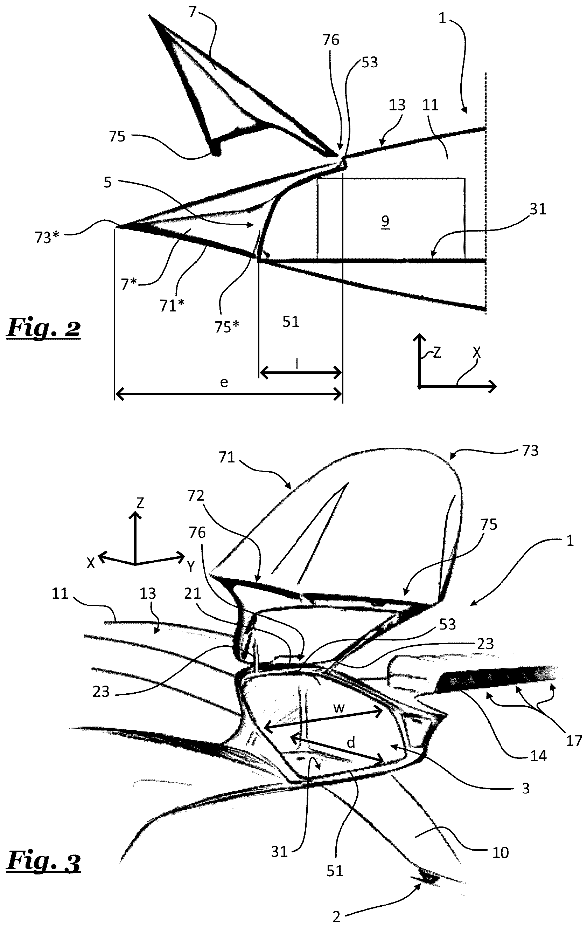

Referring to Fig. 3, the width w of the cargo bay 3 extends between 1 m and 2 m in the lateral direction Y of the aircraft 1. The depth d of the cargo bay 3 in the longitudinal direction X extends for about 0.5 m to 1.5 m. The shape of the cargo bay access opening 5 is approximately hexagonal with rounded corners, wherein the bottom edge 51 of the top edge 53 are oriented horizontally. The horizontal edges 51, 53 of the hexagonal opening 5 are larger than the other edges.

Turning back to Fig. 1, the bottom floor 31 of the cargo bay and the bottom edge 51 of the opening 5 are arranged level with one another and approximately at hip-height of the ground operator, at a height in the vertical direction Z between approximately 1.10 m and 1.40 m from the ground 2. The top edge 53 is arranged at a vertical height of approximately 2 m from the ground 2. A ground operator standing at the rear end of the aircraft 1 can easily access the entire cargo bay 3 of the aircraft 1 so as to rapidly load or unload luggage. Especially for urban air taxi operation, it is useful that a ground operator can pick or place individual items of luggage 9 from or into the cargo bay 3 for passengers during hop-on/hop-off operation.

Fig. 2 schematically shows a sectional view through the rear of the aircraft 1 with the cargo bay access door 7 in an opened state, as shown in Figs. 1 and 3, or in a closed state, indicated with *. The door 7 is hingedly attached to the fuselage 11 at the top edge 53 of the cargo bay access opening 5. In the closed state, the door 7* extends across the entire longitudinal length 1 of the opening 5 and further rearwardly. The entire longitudinal extension e of the door 7/7* is substantially larger than the longitudinal extension 1 of the opening 5. The rearward tip of the aircraft 1 is consequently formed by complexly protruding bulge 73* of the door 7 extending towards the rear of the aircraft, such that the shape of the door 7 substantially contributes to the aerodynamic characteristics of the aircraft 1. The shape of the external surface 71* of the door 7* is configured such that, along the entire circumference of the interface 72 between the door 7 and the opening 5 of the fuselage 11, a smooth transmission is provided towards the outer surface 13 of the fuselage 11 when the door 7* is closed.

The door 7 consists of a single leaf attached to the fuselage 11 with hinges 21 at the forward end 76 of the door, which are attached to the fuselage 11 near the top edge 53 of the opening 5. The hinges 21 are arranged completely inside of the aircraft 1 so as not to impair the aerodynamic characteristics thereof. In the opened state of the door 7, the door is supported by lifting pistons 23, that may be electrically, hydraulically and/or pneumatically actuated and/or springloaded. When the door 7 is open, it is lifted the vertical direction Z above the cargo bay 3 such that it doesn't obstruct a ground operator access, by moving the bottom end 75 of the door 7 at least as high as the top edge 53 of the opening 5. When the door 7 is tilted upwardly around the hinge 21 and held in an open position by pistons 23, an operator can easily access the cargo bay 3 from the rear of the aircraft 1 to load or unload luggage 9, while passengers can enter the cabin 15 through a passenger door 16 on the left and/or right side of the aircraft 1, for example between the canard structure 12 and the wings 14.

In the closed state of the door 7, the leaf of the door 7 covers the opening 5 completely. The interface 72 of the door 7 may be shaped correspondingly to the hexagonal the shape of the opening 5. Locking means of the door and a corresponding locking member of the cargo bay (not shown in detail) serve to securely hold the door 7 firmly shut during flight operation.

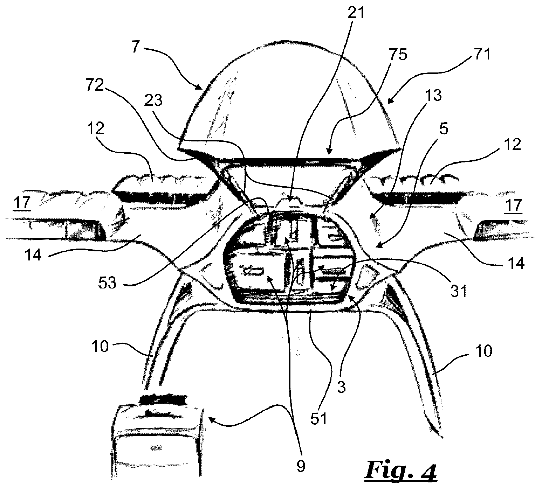

Figure 4 shows the cargo bay 3 arranged in same height from the ground 2 as the wings 14. Laterally with respect to the opening 5, for example to the right and/or to the left, the fuselage 11 may be provided with locking means, for holding the door 7 firmly to the fuselage 11 in its closed stage.

As apparent from Fig. 4, the interface 72 of the door 7 comprises an upper arcuate section and a lower arcuate section surrounding the opening 5. The width w and height (extending between lower edge 51 and upper edge 53) of the opening 5 are smaller than the respective outer dimensions of the door 7 such that the door 7 in its closed states extends circumferentially beyond the opening 5.

The features disclosed in the above description, in the figures and in the claims can be of importance both individually and in any combination for the realization of the invention in its various configurations.

### Reference Numbers

- 1: passenger aircraft
- 2: ground
- 3: cargo bay
- 5: opening
- 7: door
- 9: passenger luggage
- 10: undercarriage
- 11: fuselage
- 12: canard structure
- 13: surface
- 15: cabin
- 16: passenger door
- 14: wings
- 17: electrically powered ducted fan engine
- 21: hinge
- 23: piston
- 31: cargo bay floor
- 51: bottom edge
- 53: top edge
- 71: external surface
- 72: interface
- 73: bulge
- 75: bottom end
- 76: forward end

- e: extension of door
- 1: extension of opening
- w: width
- d: depth

- X: longitudinal direction of passenger aircraft
- Y: lateral direction of passenger aircraft
- Z: vertical direction

## Claims

1. Passenger aircraft (1), in particular passenger aircraft capable of vertical take-off and landing, comprising:
a fuselage (11) including at least one cabin (15) for carrying one or more human passengers and a cargo bay (3) for holding passenger luggage (9) with an opening (5) located in the rear of the fuselage (11) for accessing the cargo bay (3), and
a door (7) adapted to selectively close or open the opening (5), **characterized in that** the door (7) is adapted to open upwardly.

2. Passenger aircraft (1) according to claim 1, **characterized in that** the, particularly stationary and/or horizontal, cargo bay floor (31) is arranged in a height of no more than 170 cm, in particular no more than 150 cm, more particularly no more than 130 cm from the ground (2) and/or **in that** the cargo bay floor (31) is arranged in a height of at least 50 cm from the ground, in particular at least 80 cm from the ground, more particularly at least 100 cm from the ground (2).

3. Passenger aircraft (1) according to claim 2, **characterized in that** the opening (5) has a bottom edge (51) arranged flush with the cargo bay floor (31).

4. Passenger aircraft (1) according to one of the preceding claims, **characterized in that** the cargo bay (3) has a width (w) in the lateral direction (Y) of the passenger aircraft (1) of at least 1 m and no more than 3m, in particular no more than 2m, and/or **in that** the cargo bay (3) has a depth (d) in the longitudinal direction (X) of the passenger aircraft (1) of at least 0.5m and no more than 3m, in particular no more than 2m.

5. Passenger aircraft (1) according to one of the preceding claims, **characterized in that** the opening (5) is the only access to the cargo bay (3).

6. Passenger aircraft (1) according to one of the preceding claims, **characterized in that** the opening (5) extends in a lateral direction (Y) of the passenger aircraft (1) over at least 60%, in particular at least 80%, or the entirety of the cargo bay (3).

7. Passenger aircraft (1) according to one of the preceding claims, **characterized in that** the opening (5) extends in a longitudinal direction (X) of the passenger aircraft (1) over at least 60%, in particular at least 80%, or the entirety of the cargo bay (3).

8. Passenger aircraft (1) according to one of the preceding claims, **characterized in that** the opening (5) has a hexagonal shape.

9. Passenger aircraft (1) according to one of the preceding claims, **characterized in that** the door (7) comprises a single leaf configured to cover the opening (5) entirely.

10. Passenger aircraft (1) according to one of the preceding claims, **characterized in that** the door (7) has an extension (e) in the longitudinal direction (X) of the passenger aircraft (1) larger than an extension (1) of the opening (5) in the longitudinal direction (X) of the passenger aircraft, wherein in particular the door (7) comprises a convex bulge (71) protruding rearwardly, in particular forming the rearmost part of the passenger aircraft (1).

11. Passenger aircraft (1) according to one of the preceding claims, **characterized in that** the door (7) has an external surface (71) and that the fuselage (11) has the surface (13) wherein the fuselage (11) and the door (7) are adapted to one another to realize a smooth transition (17) from the surface (13) to the external surface (71), in particular completely circumferentially along the interface (72) of the door (71) facing the opening (5).

12. Passenger aircraft (1) according to one of the preceding claims, **characterized in that** the door (7) opens in the vertical direction (Z) above the cargo bay (3), wherein in particular the bottom end (75) of the door (7) is level with the bottom edge (51) of the opening (5) and/or with the cargo bay floor (31) in a closed state of the door (7), and/or wherein in particular the bottom end (75) of the door (7) is approximately level with a top edge (53) of the opening (5) in a fully open state of the door (7).

13. Passenger aircraft (1) according to one of the preceding claims, **characterized in that** the passenger aircraft (1) comprises at least one electrically powered in particular ducted fan engine (17).

14. Passenger aircraft (1) according to one of the preceding claims, **characterized in that** the rear of the fuselage (11) is formed free of a thrust engine, free of an empennage, in particular for pitch control and/or yaw control, and/or free of a boom, particularly a boom carrying a rotor.
